(19) Europäisches Patentamt
European Patent Office
Office européen des brevets

(11) **EP 2 556 225 B1**

(12) **EUROPÄISCHE PATENTSCHRIFT**

(45) Veröffentlichungstag und Bekanntmachung des Hinweises auf die Patenterteilung:
**10.06.2015 Patentblatt 2015/24**

(21) Anmeldenummer: **11712577.3**

(22) Anmeldetag: **07.04.2011**

(51) Int Cl.:
***F01N 3/20*** *(2006.01)*

(86) Internationale Anmeldenummer:
**PCT/EP2011/055412**

(87) Internationale Veröffentlichungsnummer:
**WO 2011/124637 (13.10.2011 Gazette 2011/41)**

(54) **VORRICHTUNG ZUR BEREITSTELLUNG VON FLÜSSIGEM REDUKTIONSMITTEL**

DEVICE FOR PROVIDING A LIQUID REDUCING AGENT

DISPOSITIF DE FOURNITURE D'AGENT REDUCTEUR LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2010 DE 102010014314**

(43) Veröffentlichungstag der Anmeldung:
**13.02.2013 Patentblatt 2013/07**

(73) Patentinhaber: **Emitec Gesellschaft für Emissionstechnologie mbH**
**53797 Lohmar (DE)**

(72) Erfinder:
• **HODGSON, Jan**
**53840 Troisdorf (DE)**
• **SCHEPERS, Sven**
**53844 Troisdorf (DE)**

(74) Vertreter: **Rössler, Matthias**
**KNH Patentanwälte Kahlhöfer Neumann Rößler Heine PartG mbB**
**Postfach 10 33 63**
**40024 Düsseldorf (DE)**

(56) Entgegenhaltungen:
WO-A1-2011/029774     DE-A1- 19 936 287
DE-A1-102004 051 746     DE-A1-102008 001 948

**Beschreibung**

Die Erfindung betrifft eine Vorrichtung zur Bereitstellung von flüssigem Reduktionsmittel, aufweisend einen Tank für das flüssige Reduktionsmittel sowie eine an diesem Tank angeordnete Fördereinheit zur Förderung des flüssigen Reduktionsmittels aus dem Tank zu einem Injektor zur Zufuhr des Reduktionsmittels in eine Abgasbehandlungsvorrichtung.

In letzter Zeit kommen zur Reinigung der Abgase von (mobilen) Verbrennungskraftmaschinen vermehrt Abgasbehandlungsvorrichtungen zum Einsatz, die das Abgas der Verbrennungskraftmaschine unter Zuhilfenahme eines dem Abgas zugeführten Reduktionsmittels reinigen. Mobile Verbrennungskraftmaschinen werden beispielsweise zum Antrieb von Kraftfahrzeugen eingesetzt.

Beispielsweise ist das Verfahren der selektiven katalytischen Reduktion bekannt, bei welchem die Abgase einer Verbrennungskraftmaschine von Stickoxidverbindungen gereinigt werden, wobei dem Abgas ein die Stickoxidverbindungen reduzierendes Medium zugeführt wird. Ein derartiges Medium ist beispielsweise Ammoniak. Ammoniak wird in Kraftfahrzeugen normalerweise nicht direkt bevorratet sondern in Form eines Vorläufermediums, das auch Reduktionsmittelvorläufer genannt wird. Anschließend wird dieser Reduktionsmittelvorläufer in einem eigens dafür vorgesehenen Reaktor oder in einer Abgasbehandlungsvorrichtung zu Ammoniak, dem eigentlichen Reduktionsmittel, umgewandelt.

Ein solcher Reduktionsmittelvorläufer ist beispielsweise eine 32,5 % Harnstoff-Wasser-Lösung, die unter dem Handelsnamen AdBlue erhältlich ist. Eine solche Reduktionsmittelvorläuferlösung ist gesundheitlich unbedenklich und damit unproblematisch zu bevorraten. Problematisch ist allerdings, dass eine derartige Reduktionsmittelvorläuferlösung einfrieren kann. Dies kann bereits bei Temperaturen eintreten, die während des Betriebs eines Kraftfahrzeugs auftreten können. Eine 32,5 % Harnstoff-Wasser-Lösung gefriert beispielsweise bei -11 °C. Derartige Temperaturen können bei Kraftfahrzeugen durchaus auftreten, insbesondere wenn diese zwischen den Betriebsphasen lange Stillstandszeiten haben. Daher sollte eine Vorrichtung zur Bereitstellung von flüssigem Reduktionsmittel derart ausgelegt sein, dass das Einfrieren des Reduktionsmittels entweder verhindert wird oder aber zumindest nicht zu einer Schädigung der Vorrichtung führen kann.

Darüber hinaus kann Reduktionsmittel unterschiedliche Verunreinigungen enthalten. Diese Verunreinigungen sollen zum einen dem Abgas der Verbrennungskraftmaschine nicht zugeführt werden, weil diese zu Rückständen im Abgassystem führen können. Andererseits sollen solche Verunreinigungen auch nicht in eine Vorrichtung zur Förderung des Reduktionsmittels gelangen, weil die Verunreinigungen in der Vorrichtung zu Verstopfungen von Kanälen und/oder Ventilen führen könnten.

Eine wichtige Anforderung an Vorrichtungen zur Bereitstellung von Reduktionsmittel ist auch, dass derartige Vorrichtungen möglichst kostengünstig sein sollen. Die Reinigung von Abgasen mit Hilfe eines zugeführten Reduktionsmittels stellt einen erheblichen zusätzlichen Kostenfaktor bei der Produktion und bei dem Betrieb eines Kraftfahrzeugs dar.

Aus der DE-A1-10 2008 001 948 ist eine Reduktionsmittelzuführvorrichtung bekannt, die in einem SCR-System für Fahrzeugverbrennungskraftmaschinen verwendet werden kann. Diese Reduktionsmittelzuführvorrichtung hat eine Pumpe, die schwimmend in einem Tank angeordnet ist und die dem Tank über eine Einlassöffnung Reduktionsmittel entnehmen kann. Die Reduktionsmittelzuführvorrichtung gemäß DE-A1-10 2008 001 948 hat mehrere Filter zur Filterung des Reduktionsmttels, die jeweils in Förderrichtung des Reduktionsmittels hinter der Pumpe angeordnet sind.

Die DE-A1-10 2004 051 746 offenbart ein Tankmodul für ein Reduktionsmittel aufweisend einen Tank, bei welchem innerhalb des Tanks ein Dosiersystem angeordnet ist. Das Dosiersystem weist einen Filtereinsatz auf. Dieser Filtereinsatz umgibt ein Saugrohr, welches an das Dosiersystem angeschlossen ist.

Die DE-A1-199 36 287 offenbart ein Kraftstoffversorgungssystem mit einer Förderpumpe sowie einem Filterelement welches zusammen mit der Förderpumpe in einem Gehäuse angeordnet ist, wobei das Gehäuse, das Filterelement und die Förderpumpe zusammen in dem Kraftstofftank eingesetzt sind.

Ausgehend von diesem Stand der Technik ist es Aufgabe der hier vorliegenden Erfindung, die im Zusammenhang mit dem Stand der Technik geschilderten technischen Probleme zumindest teilweise zu lösen. Es soll insbesondere eine besonders kostengünstige Vorrichtung zur Bereitstellung von flüssigem Reduktionsmittel vorgestellt werden.

Diese Aufgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Vorrichtung zur Bereitstellung von flüssigem Reduktionsmittel, aufweisend einen Tank mit einem Innenraum und einen zumindest teilweise im Innenraum des Tanks angeordneten Behälter, wobei der Behälter außen zumindest teilweise von einem Filter mit einer Filterfläche und einer Filtertiefe umgeben ist, und sich in dem Behälter eine Fördereinheit befindet, die dazu eingerichtet ist, Reduktionsmittel aus dem Tank durch den Filter hinaus zu einer Abnahmestelle für Reduktionsmittel zu fördern, wobei Reduktionsmittel, dass im Tank (2) gelagert ist, zuerst den Filter (5) durchströmt bevor es in einen inneren Bereich des Behälters (4) einströmt, insbesondere bevor es durch eine Entnahmeöffnung (16) in die Fördereinheit (8) fließt.

Unter flüssigem Reduktionsmittel wird hier insbesondere ein flüssiger Reduktionsmittelvorläufer, wie beispielsweise eine 32,5 %-ige Harnstoff-Wasser-Lösung verstanden, der in ein Reduktionsmittel umsetzbar ist. Der Tank für das Reduktionsmittel ist vorzugsweise aus Kunststoff gefertigt. Beispielsweise kann der Tank mit Hilfe eines Spritzgussverfahrens hergestellt sein. Der zumindest teilweise im Innenraum des Tanks angeordnete Behälter ist bevorzugt aus Metall. Der Behälter kann in die Wandung des Tanks teilweise eingegossen sein, so dass eine fluiddichte Verbindung zwischen dem Behälter und dem Tank besteht. Möglich ist auch, dass an dem Tank ein Flansch angegossen ist, an welchem der Behälter lösbar befestigt ist. Beispielsweise kann der Behälter an dem Flansch mit Hilfe eines SAF-Verschlusses oder einer SAE-Verschraubung befestigt sein. Der Flansch kann beispielsweise wie der Behälter aus Metall sein und fluiddicht an eine Wand des Tanks angegossen sein. Vorzugsweise haben der Flansch und der Behälter annähernd gleiche thermische Ausdehnungskoeffizienten, so dass auch bei wechselnden Temperaturbedingungen die Dichtigkeit zwischen dem Flansch und dem Behälter gewährleistet ist.

Der Behälter ist vorzugsweise in einer Öffnung in einer Tankwand des Tanks befestigt. Der Behälter ist vorzugsweise als Topf mit einem Topfboden sowie einer (zylinderförmigen) mit dem Topfboden verbundenen Topfwand und einer offenen Seite ausgeführt. Der Behälter ist vorzugsweise so in die Tankwand eingesetzt, dass der Behälter eine Öffnung in der Tankwand verschließt und der Behälter sich in den Innenraum des Tanks hinein erstreckt. Der Behälter hat eine Aufnahme für die Fördereinheit, die frei von Reduktionsmittel ist bzw. in der das Reduktionsmittel separat und dicht geführt ist.

Der Filter, welcher den Behälter zumindest teilweise umgibt, umspannt vorzugsweise die Umfangsfläche des Behälters bzw. die Topfwand vollständig. Zusätzlich kann auch eine Behälteroberseite von dem Filter umspannt, bzw. umgeben sein. Bevorzugt ist daher ein Filterzylinder bzw. ein Filterring. Der Filter ist insbesondere nur zwischen Tankwand und Behälter angeordnet, so dass der Behälter und der Filter zusammen platzsparend im Tank angeordnet werden können. Damit ist insbesondere gemeint, dass kein weiteres Bauteil zwischen Tankwand und Filter und/oder zwischen Filter und Behälter angeordnet ist. Mit anderen Worten bedeutet dass auch, dass das Reduktionsmittel, das im Tank gelagert ist, zunächst bzw. zuerst den Filter durchströmt, bevor es in einen inneren Bereich des Behälters einströmt. Damit ist insbesondere veranschaulicht, dass der Filter außerhalb des Behälters angeordnet ist und der Behälter das Tankvolumen zudem mit begrenzt.

Der Filter muss allerdings nicht rotationssymmetrisch ausgeführt sein. Möglich ist somit auch, dass der Filter eine zylindrische Grundform mit einer ersten Eindellung aufweist. An dem Behälter kann dann eine entsprechende zweite Eindellung vorgesehen sein. Durch eine solche Gestaltung ist die Orientierung des Filters zum Behälter vorgegeben, weil der Filter nur so zu dem Behälter orientiert sein kann, dass die erste Eindellung in die zweite Eindellung eingreift. Der Behälter kann in eine runde Öffnung im Tankboden (Tanköffnung) eingesetzt sein, wobei der Querschnitt der runden Öffnung im Wesentlichen dem Querschnitt der zylindrischen Grundform entspricht. Durch die erste Eindellung und die zweite Eindellung ergibt sich dann ein Freiraum in der Öffnung, in welchen z. B. ein Levelsensor eingesetzt werden kann, welcher nicht in einem Zwischenraum zwischen dem Filter und dem Tank angeordnet ist bzw. sich außerhalb des Filters im Tank befindet. Der Behälter kann an seiner Unterseite eine Abschlussplatte (als Behälterboden) aufweisen, welche den Behälter und den Levelsensor trägt, und durch welche die Öffnung im Tankboden vollständig verschlossen wird.

Mit einer Filterfläche im Sinne der hier vorliegenden Erfindung ist die gesamte zur Verfügung stehende, von einem Reduktionsmittel anströmbare bzw. durchströmbare Fläche des Filters bzw. die Oberfläche des Filtermaterials gemeint. Die Filtertiefe bezeichnet die Länge des Wegs, den das Reduktionsmittel durch den Filter nehmen muss bzw. die Dicke des Filtermaterials des Filters.

Innerhalb des Behälters ist eine Fördereinheit für das Reduktionsmittel vorgesehen. Diese Fördereinheit weist vorzugsweise zumindest eine der folgenden Komponenten auf: eine Pumpe, zumindest ein Rücklaufventil zur Steuerung eines Rückflusses an Reduktionsmittel aus der Fördereinheit zurück in den Tank, zumindest einen Sensor, und zumindest eine Heizung zur Aufheizung von eingefrorenem Reduktionsmittel. Vorzugsweise sind alle aufgezählten Komponenten bei der Fördereinheit in den Behälter vorhanden. Der zumindest eine Sensor ist vorzugsweise ein Temperatursensor, ein Drucksensor, ein Durchflusssensor und/oder ein Sensor zur Bestimmung einer Konzentration oder einer chemischen Zusammensetzung des Reduktionsmittels. Zur Verbindung der einzelnen beschriebenen Komponenten und zur Weiterleitung des Reduktionsmittels sind vorzugsweise Kanäle vorgesehen. Diese Kanäle können beispielsweise in einer metallischen Trägerplatte vorgesehen sein. Die metallische Trägerplatte kann an die Wand des Behälters wärmeleitend angebunden sein, so dass über die metallische Trägerplatte eine Verteilung von Wärme zwischen den einzelnen Komponenten sowie zu dem Behälter erfolgen kann. Vorzugsweise ist am Behälter nur eine (einzelne) aktive Heizung vorgesehen, wobei die von dieser Heizung produzierte Wärme über entsprechende (passive) Verteilstrukturen an die Komponenten der Fördereinheit sowie das in diesen Komponenten befindliche Reduktionsmittel und das im Tank befindliche Reduktionsmittel verteilt werden kann. Bevorzugt ist, dass der außen angeordnete Filter der einzige Filter der Vorrichtung ist bzw. dass insbesondere innerhalb des Behälters kein weiterer Filter vorgesehen ist.

Durch die erfindungsgemäße Vorrichtung kann in einer sehr kompakten Baueinheit, eine sehr große Filterfläche für das Reduktionsmittel realisiert werden. Die Verunreinigungen des Reduktionsmittels im Tank können den Filter einer Fördereinheit regelmäßig leicht verstopfen. Insbesondere wenn der Filter innerhalb einer Fördereinheit angeordnet ist, sind das Volumen des Filters sowie die zur Verfügung stehende Filterfläche begrenzt. Daher kann der Filter leicht verstopfen. Dies kann durch die erfindungsgemäße Vorrichtung vermieden werden. Bei gleicher Baugröße des Systems ist die Filterfläche bei einer erfindungsgemäßen Vorrichtung gegenüber der Filterfläche bei einer entsprechenden Vorrichtung mit internem Filter größer.

Besonders vorteilhaft ist die erfindungsgemäße Vorrichtung, wenn der Filter eine innere Stützstruktur und eine äußere Stützstruktur sowie ein zwischen der inneren Stützstruktur und der äußeren Stützstruktur angeordnetes Filtermedium, bzw. ein Filtermaterial aufweist, wobei die innere Stützstruktur und die äußere Stützstruktur Öffnungen zum Durchfluss von Reduktionsmittel aufweisen. Die innere Stützstruktur und/oder die äußere Stützstruktur können beispielsweise als Sieb bzw. in Form eines Gewebes ausgeführt sein. Es ist auch möglich, dass die innere Stützstruktur und/oder die äußere Stützstruktur in Form eines Blechs oder einer aus Kunststoff gefertigten Wand ausgeführt sind. Dabei sind in Abständen zueinander Öffnungen vorgesehen sind, durch welche das Reduktionsmittel durch die Stützstrukturen zu dem Filtermedium gelangen kann. Die Öffnungen der Stützstruktur sind deutlich größer als die Filterporen des Filtermaterials. Insbesondere sind die Öffnungen im Mittel mindestens 50 mal, bevorzugt mindestens 100 mal und besonders bevorzugt mindestens 300 mal so groß wie die Filterporen des Filtermaterials.

Die Stützstrukturen stellen vorrangig eine Fixierung und einen Schlagschutz für das Filtermaterial dar. Insbesondere wenn im Tank teilweise gefrorenes Reduktionsmittel vorliegt, hat die Stützstruktur die Aufgabe, das Filtermaterial vor beweglichem gefrorenem Reduktionsmittel zu schützen. Außerdem verleihen die Stützstrukturen dem Filtermaterial Formstabilität. Der Abstand des Filtermaterials zum Behälter wird so definiert.

Auch möglich ist, dass innerhalb der äußeren Stützstruktur oder der inneren Stützstruktur oder an der äußeren Stützstruktur und/oder der inneren Stützstruktur eine Heizung zur Aufheizung von Reduktionsmittel vorgesehen ist. Eine derartige Heizung kann beispielsweise als eine auf die Stützstruktur aufgedruckte Heizwendel ausgeführt sein.

Das Filtermaterial, bzw. das Filtermedium des Filters kann allerdings auch selbsttragend sein, so dass keine innere Stützstruktur und/oder keine äußere Stützstruktur vorhanden ist. Das Filtermaterial bzw. das Filtermedium ist dann selbst formstabil.

Weiterhin kann das Filtermedium derart ausgeführt sein, dass seine Filterwirkung über die Filtertiefe unterschiedlich ist. Beispielsweise kann das Filtermedium so ausgeführt sein, dass grobe Partikel bereits sehr früh, nahe an der äußeren Stützstruktur, gefiltert werden, während feinere Partikel tiefer in das Filtermedium eindringen und z. B. näher an der inneren Stützstruktur im Filtermedium gefiltert werden. Darüber ist es möglich, das Filtermedium über die Filterfläche unterschiedlich auszuführen. Beispielsweise kann das Filtermedium weiter unten nahe dem Tankboden weniger durchlässig ausgeführt sein. Partikel sammeln sich in einem Tank für Reduktionsmittel regelmäßig am Tankboden an. Weiter oben im Tank ist das Reduktionsmittel häufig reiner. Deshalb ist es vorteilhaft, das Filtermedium über die Höhe des Filters im Tank unterschiedlich auszuführen. Beispielsweise können in einem Bereich des Filtermediums im Tankboden zusätzliche Filtermaterialien vorgesehen sein, die besonders zur Filterung von groben Partikeln geeignet sind.

In einer Ausführungsvariante der erfindungsgemäßen Vorrichtung ist das Filtermaterial derart aufgebaut, dass es über die Filtertiefe zunächst Partikel mit einem Durchmesser von größer als maximal 70 $\mu$m [Mikrometer] filtert. Anschließend folgt entlang der Filtertiefe ein Bereich in dem Partikel mit einem Durchmesser zwischen maximal 70 $\mu$m [Mikrometer] und minimal 20 $\mu$m [Mikrometer] gefiltert werden, so dass diesen Bereich lediglich kleinere Partikel passieren können. Zuletzt folgt eine feine Filterschicht, die sicherstellt, dass keine Partikel mit einem Durchmesser größer 8 $\mu$m [Mikrometer] in die Fördereinheit gelangen. Maßgeblich für die Durchlässigkeit des Filtermediums ist vorrangig die feinste Filterschicht. Das Filtermaterial kann insbesondere mehrlagig ausgeführt sein. Für die verschiedenen beschriebenen Filterschichten zur Filterung unterschiedlich großer Partikel kann dann jeweils eine eigene Schicht Filtermaterial verwendet werden, durch welche jeweils Partikel entsprechend den oben angegebenen Partikeldurchmessern passieren können. Die Größe der Poren einer Filterschicht definiert zugleich die Durchlässigkeit der Filterschicht für Partikel. Die maßgebliche Porengröße beträgt bei dem Filtermedium maximal 20 $\mu$m [Mikrometer], vorzugsweise maximal 15 $\mu$m [Mikrometer] und besonders bevorzugt maximal 8 $\mu$m [Mikrometer].

In einer Ausführungsvariante der erfindungsgemäßen Vorrichtung kann das Filtermedium eine Filtertiefe zwischen 5 mm [Millimeter] und 15 mm [Millimeter] aufweisen. Diese Filtertiefe ist insbesondere vorteilhaft, wenn das Filtermedium ein Tiefenfilter ist, bei welchem Partikel im Filtermaterial abgelagert werden.

Das Filtermaterial bzw. das Filtermedium ist beispielsweise aus Kunststofffasern aufgebaut. Beispielsweise ist das Filtermaterial bzw. das Filtermedium mit Polypropylen-Fasern hergestellt. Das Filtermaterial bzw. das Filtermedium kann nach Art eines Gewebes oder nach Art eines Vlieses gefertigt sein.

Das Filtermaterial kann beispielsweise ein Bandmaterial sein, welches um den Behälter herumgelegt bzw. gewickelt ist. Ein solches Bandmaterial kann auch mehrfach um den Behälter herumgelegt bzw. gewickelt sein. So kann ein mehrlagiges Filtermaterial ausgebildet sein. Das Bandmaterial kann auch bereichsweise unterschiedliche Eigenschaften und insbesondere unterschiedliche Porengrößen aufweisen. Bevorzugt sind jeweils Flächen des Filtermaterials mit unterschiedlichen Porengrößen ausgeführt. Ein solches Bandmaterial kann derart um den Behälter herumgelegt bzw. gewickelt werden, dass ein mehrlagiges Filtermaterial entsteht, welches entlang der Filtertiefe unterschiedliche Porengrößen aufweist.

Die Stützstrukturen sind beispielsweise aus Kunststoff oder Metall gefertigt. Bei aus Kunststoff gefertigten Stützstrukturen kommt bevorzugt PA [Polyamid] oder PP [Polypropylen] zum Einsatz. Metallische Stützstrukturen können beispielsweise aus Edelstahl gefertigt sein. Vorzugsweise kommen V2A-Edelstähle oder V4A-Edelstähle zum Einsatz. Ein Beispiel für einen geeigneten Edelstahl ist der Stahl 1.4301 nach deutschem Stahlschlüssel. Metallische Stützstrukturen haben den Vorteil, dass sie gut wärmeleitend sind. Insbesondere metallische Stützstrukturen können auch nach Art eines Gewebes oder nach Art eines Vlieses aus Metallfilamenten gefertigt sein, wobei die Stützstrukturen jeweils erheblich größere Öffnungen aufweisen sollten als das Filtermedium. Vorzugsweise haben die Stützstrukturen Öffnungen mit einem Durchmesser im Bereich von 1 mm [Millimeter] bis 10 mm [Millimeter].

Das Filtermaterial des Filters ist vorzugsweise an seinen Rändern bzw. in seinen Randbereichen mit zumindest einer Dichtlippe an dem Behälter abgedichtet, so dass Reduktionsmittel, welches aus dem Tank zu einer Entnahmeöffnung an dem Behälter gelangt, den Filter passieren muss. Alternativ oder zusätzlich kann das Filtermaterial an seinen Rändern bzw. in seinen Randbereichen auch mit einer Klebeverbindung abgedichtet sein. In einer Ausführungsvariante ist das Filtermaterial des Filters unmittelbar an dem Behälter abgedichtet. Es ist allerdings auch möglich, dass das Filtermaterial an einer Trägerstruktur abgedichtet ist. Eine solche Trägerstruktur kann beispielsweise eine Haube sein, welche auf den Behälter aufsetzbar ist.

Weiterhin vorteilhaft ist die erfindungsgemäße Vorrichtung, wenn um den Filter herum im Tank Strukturen zur Vergleichmäßigung der Einströmung von Reduktionsmittel zum Filter hin vorgesehen sind. Beispielsweise können um den Filter herum sich radial nach außen erstreckende Rippen vorgesehen sein. Durch derartige Rippen kann eine gleichmäßige Anströmung des Filters gewährleistet sein. Insbesondere wird die Strömung durch derartige Rippen in Richtung senkrecht zur Oberfläche des Filters umgelenkt. Die Verteilstrukturen können Teil des Tankes, des Behälters und/oder des Filters sein bzw. formschlüssig (durch ineinander greifende Konturen), stoffschlüssig (Komponenten werden durch atomare oder molekulare Kräfte zusammengehalten, z. B. Löten, Schweißen, Kleben, etc.) oder kraftschlüssig (aufgrund einer Haftreibung) an diesen Komponenten montiert sein.

Weiterhin vorteilhaft ist die erfindungsgemäße Vorrichtung, wenn der Tank einen Tankboden aufweist und der Behälter eine Entnahmeöffnung aufweist, durch welche Reduktionsmittel aus dem Tank in die Fördereinheit fließen kann und der Behälter so am Tankboden angeordnet ist, dass sich die Entnahmeöffnung in der Nähe des Tankbodens befindet. Vorzugsweise ist im Bereich des Behälters im Tankboden sogar eine Vertiefung vorgesehen, wobei der Behälter in eine Tanköffnung im Tankboden im Bereich dieser Vertiefung eingesetzt ist. Umfänglich um den Behälter herum ergibt sich dann eine sumpfförmige Vertiefung bzw. ein ringförmiger Sumpf des Innenraums des Tanks. In einer derartigen Vertiefung steht auch bei sehr niedrigen Füllständen an Reduktionsmittel im Tank noch Reduktionsmittel zur Verfügung. Außerdem sammeln sich Verunreinigungen des Reduktionsmittels im Tank aufgrund der Schwerkraft regelmäßig gerade an der tiefsten Stelle des Tankes an. Diese tiefste Stelle wird von der Vertiefung bzw. dem ringförmigen Sumpf gebildet. Durch die Positionierung der Entnahmeöffnung in der Nähe des Tankbodens ist es möglich, den Tank weitgehend zu leeren. Das im Tank enthaltene Reduktionsmittel kann über den bis zum Tankboden reichenden Filter zu der Entnahmeöffnung gelangen.

Weiterhin vorteilhaft ist die erfindungsgemäße Vorrichtung, wenn die Filterfläche des Filters zumindest dem zehnfachen Quadrat der Filtertiefe entspricht. Vorzugsweise entspricht die Filterfläche sogar dem Fünfzigfachen und besonders bevorzugt sogar dem Zweihundertfachen des Quadrats der Filterfläche. Hier wird insbesondere ein flächig stark ausgedehnter Filter mit einer geringen Tiefe beschrieben. Ein derartiger Filter kann nicht leicht verstopfen, weil zur Filterung eine sehr große Filterfläche zur Verfügung steht. Bevorzugt ergibt sich das Verhältnis von Filtertiefe zu Filterfläche nach folgender Formel:

$$A_F = k \cdot (T_F)^2$$

Bei dieser Formel entspricht der Parameter AF der Filterfläche und der Parameter TF der Tiefe des Filtermaterials. Der Parameter k gibt das Verhältnis des Quadrats der Filtertiefe zur Filterfläche an.

Weiterhin vorteilhaft ist die erfindungsgemäße Vorrichtung, wenn der Filter eine Wellung aufweist. Durch eine Wellung des Filters kann die Filterfläche bei einem geringen Platzbedarf für den Filter noch weiter vergrößert werden. Die Wellung kann beispielsweise sinusförmig, dreieckig, rechteckig und/oder mäanderförmig ausgeführt sein. Dabei wird die Wellung durch eine Amplitude und eine Wellenlänge definiert. Die Wellenlänge entspricht vorzugsweise zumindest der dreifachen Filtertiefe und besonders bevorzugt zumindest der fünffachen Filtertiefe. Die Amplitude entspricht vorzugsweise zumindest der fünffachen Filtertiefe und besonders bevorzugt zumindest der zehnfachen Filtertiefe.

Weiterhin vorteilhaft ist die erfindungsgemäße Vorrichtung, wenn zwischen dem Filter und dem Behälter ein Zwischenraum vorgesehen ist, durch welchen Reduktionsmittel von einer beliebigen Stelle auf der Filterfläche zu einer Entnahmeöffnung am Behälter gelangen kann. Die Entnahmeöffnung am Behälter, durch welche Reduktionsmittel in die Fördereinheit gelangen kann, hat hier eine Querschnittsfläche, die gegenüber der Filterfläche sehr klein ist. Die Querschnittsfläche der Entnahmeöffnung beträgt beispielsweise maximal ein Zwanzigstel, vorzugsweise maximal ein Fünfzigstel und besonders bevorzugt maximal ein Zweihundertstel der Filterfläche. Eine derartige Entnahmeöffnung würde durch Verschmutzungen im Reduktionsmittel sehr leicht verstopfen. Genau dies wird durch die sehr große Filterfläche und die Anordnung des Filters außen am Behälter in Strömungsrichtung des Reduktionsmittels vor der Entnahmeöffnung vermieden. Das gefilterte Reduktionsmittel muss allerdings von einer beliebigen Stelle des Filters hin zu der Entnahmeöffnung gelangen können. Dies gewährleistet der Zwischenraum zwischen dem Filter und dem Behälter. Ein Zwischenraum kann insbesondere dadurch realisiert sein, dass der Filter über die gesamte Wand des Behälters beabstandet angeordnet ist.

Dazu können auch Abstandshalter zwischen der Wand und dem Filter vorgesehen sein.

Der Zwischenraum stellt vorzugsweise auch ein etwa zylindrisches Volumen dar, welches durch seine besonders nahe Anordnung zu der Fördereinheit sowie an der zu einer an dem Behälter vorgesehenen Heizung besonders schnell aufgeheizt werden kann. Wenn im Tank eingefrorenes Reduktionsmittel vorliegt, stellt der Zwischenraum ein Startvolumen dar, welches nach dem Start des Betriebs der erfindungsgemäßen Vorrichtung besonders schnell aufgetaut werden kann, so dass an der Abnahmestelle für flüssiges Reduktionsmittel besonders schnell flüssiges Reduktionsmittel zur Verfügung steht, auch wenn beim Start in der Vorrichtung zumindest teilweise gefrorenes Reduktionsmittel vorliegt.

An dem Behälter kann eine Struktur vorgesehen sein, welche dazu geeignet ist, Reduktionsmittel in den Zwischenraum zwischen dem Filter und dem Behälter hin zu einer Entnahmeöffnung zu lenken. Eine derartige Struktur kann beispielsweise in Form von wenigstens einer (zumindest teilweise umlaufenden) Rille auf der Oberfläche des Behälters realisiert sein. Diese wenigstens eine Rille kann auf die Entnahmeöffnung zulaufen.

Der Zwischenraum zwischen dem Filter und dem Behälter kann im Bereich des Tankbodens eine Verbreiterung in Form einer (zumindest teilweise) umlaufenden Rinne aufweisen. Diese Rinne ist insbesondere im Bereich der Entnahmeöffnung angeordnet. So kann ein vergrößertes Reservoir für gefiltertes Reduktionsmittel zwischen dem Behälter und dem Filter ausgebildet sein.

Weiterhin besonders vorteilhaft ist die erfindungsgemäße Vorrichtung, wenn die Fördereinheit eine Rücklaufleitung zum Rücklauf von Reduktionsmittel aus der Fördereinheit in den Tank aufweist und diese Rücklaufleitung in einen Zwischenraum zwischen dem Filter und dem Behälter mündet. Eine derartige Rücklaufleitung ist typischerweise durch ein in der Fördereinheit vorgesehenes Rücklaufventil verschließbar. So kann die Fördereinheit wahlweise in zwei verschiedenen Betriebsarten betrieben werden. Bei einer ersten Betriebsart erfolgt eine Förderung von Reduktionsmittel aus dem Tank durch die Fördereinheit und die Rücklaufleitung zurück in den Tank. Bei dieser ersten Betriebsart spricht man auch von einer Kreisförderung. Eine derartige Kreisförderung ist beispielsweise sinnvoll, um eine in der Fördereinheit entstandene Luftblase aus der Fördereinheit hinaus zu fördern. Möglich ist auch, durch eine derartige Kreisförderung ein Aufheizen des Reduktionsmittels zu ermöglichen. Bei einer zweiten Betriebsart erfolgt eine Förderung von Reduktionsmittel aus dem Tank durch die Fördereinheit zu einer Abnahmestelle für Reduktionsmittel.

Bei einer innerhalb der Fördereinheit angeordneten Heizung wird das Reduktionsmittel in der Fördereinheit besonders stark erwärmt. Durch eine Kreisförderung kann somit ein Aufheizen von Reduktionsmittel im Tank erreicht werden. Insbesondere kann ein Aufheizen von Reduktionsmittel in einem Zwischenraum zwischen dem Filter und dem Behälter erreicht werden.

Damit die Wärme von einer Heizung, welche innerhalb der Fördereinheit bzw. innerhalb des Behälters angebracht ist, auch in den Tank hinein gelangt, können an dem Behälter Wärmeleitbrücken vorgesehen sein, welche sich von dem Behälter durch den Filter hindurch in den Tank erstrecken. Diese Wärmeleitbrücken bestehen vorzugsweise zumindest teilweise aus einem Metall mit einer guten Wärmeleitfähigkeit.

Der Filter kann mit einer Haube kombiniert sein, welche auf den Behälter aufsetzbar ist. Der Filter und die Haube bilden dann ein gemeinsames Bauteil. Die Haube dient als Trägerstruktur für den Filter bzw. das Filtermaterial des Filters. Die Haube ist an dem Behälter vorzugsweise abgedichtet, so dass Reduktionsmittel, welches aus dem Tank zu einer Entnahmeöffnung an dem Behälter gelangt, den Filter passieren muss. Die Haube kann an den Behälter mit Schrauben angeschraubt sein. Alternativ können die Haube und der Behälter auch jeweils mit einem Gewinde versehen sein. Die Haube ist dann unmittelbar an den Behälter angeschraubt bzw. auf den Behälter aufgeschraubt. An der Haube und an dem Behälter kann auch ein Schnappverschluss vorgesehen sein, über welchen die Haube an dem Behälter arretiert ist. Ein Schnappverschluss kann beispielsweise durch eine umlaufende Delle an dem Behälter realisiert sein, wobei die Haube eine entsprechende Auswölbung aufweist, welche auf dieser umlaufenden Delle einrasten kann. In einer weiteren Ausführungsvariante kann die Haube auch magnetisch an dem Behälter befestigt sein.

Der Filter ist gemäß einer bevorzugten Ausführungsvariante der Erfindung so ausgeführt, dass er zumindest teilweise durch Schwappbewegungen des Reduktionsmittels im Tank gereinigt wird. Die Schwappbewegungen können Partikel wegspülen, die sich an der Oberfläche des Filters oder im Bereich der Oberfläche des Filters angeordnet haben. Dazu ist der Filter vorzugsweise außen in Form eines Blechs oder einer aus Kunststoff gefertigten Wand ausgeführt. Die außenliegende, dass heißt dem Behälter abgewandte Oberfläche des Filter ist dabei so glatt ausgeführt, dass die Partikel darauf durch die Schwappbewegungen weggespült werden. Die Schwappbewegungen können durch Strukturen unterstützt werden, die sich von dem Filter ausgehend in den Tank hinein erstrecken und gleichzeitig für eine gleichmäßige Anströmung des Filters sorgen.

Insbesondere ist dieser Filter der einzige Filter für das Reduktionsmittel zwischen Tank und Zugabestelle des Reduktionsmittels in die Abgasleitung, der während des Betriebs wirksam ist (also ausgenommen Mikro-Montage-Filtereinsätze z.B. im Injektor, der Pumpe, etc., die nur beim Erstbetrieb wirksam sind). Durch den Filter wird damit eine ausreichende Reinigung des Reduktionsmittels gewährleistet, so dass eine Beschädigung der Bauteile in der Dosiereinheit (Pumpe, Ventil, Injektor usw.) vermieden wird.

Auch erfindungsgemäß ist ein Kraftfahrzeug, aufweisend eine Verbrennungskraftmaschine und eine Abgasanlage zur Reinigung der Abgase der Verbrennungskraftmaschine, wobei die Abgasanlage einen Injektor zur Zufuhr eines Reduktionsmittels in die Abgasanlage aufweist und der Injektor an eine erfindungsgemäße Vorrichtung zur Bereitstellung von flüssigem Reduktionsmittel angeschlossen ist.

Klarstellend sei noch darauf hingewiesen, dass die hier benutzte Formulierung "zumindest ein/e" beispielsweise auch sinngemäß ersetzt werden kann durch die Formulierung "ein/e (1) und/oder mehrere" und/oder "alle".

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:

Fig. 1:     eine erste Ausführungsvariante einer Vorrichtung,

Fig. 2:     eine zweite Ausführungsvariante einer Vorrichtung,

Fig. 3:     eine dritte Ausführungsvariante einer Vorrichtung,

Fig. 4:     eine vierte Ausführungsvariante einer Vorrichtung,

Fig. 5:     eine Schnittansicht durch eine Vorrichtung,

Fig. 6:     eine Schnittansicht durch eine weitere Vorrichtung,

Fig. 7:     ein Kraftfahrzeug, aufweisend eine Vorrichtung,

Fig. 8:     einen Ausschnitt aus einer äußeren Stützstruktur einer Ausführungsvariante einer Vorrichtung, und

Fig. 9:     einen Ausschnitt aus einer äußeren Stützstruktur einer weiteren Ausführungsvariante einer Vorrichtung.

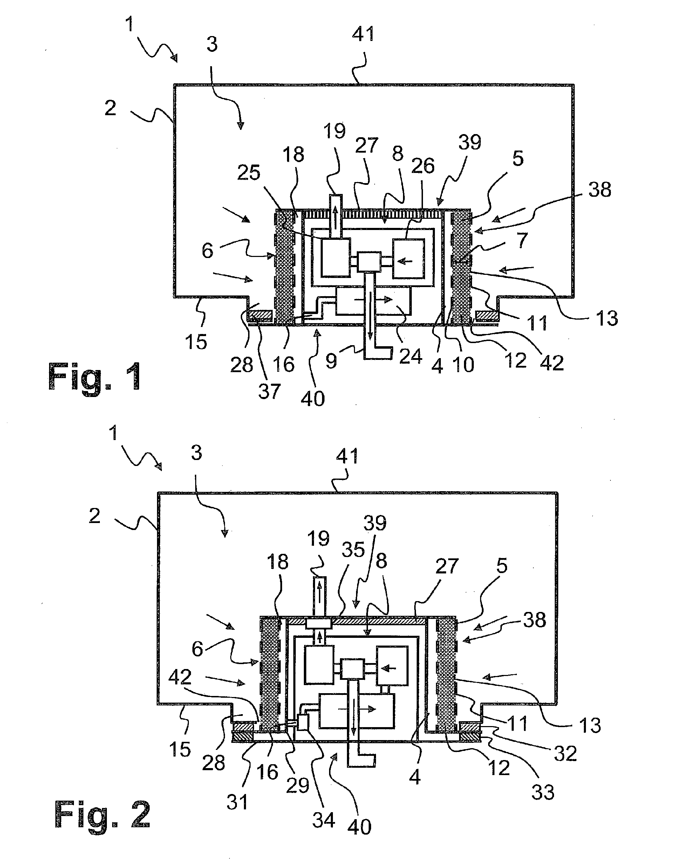

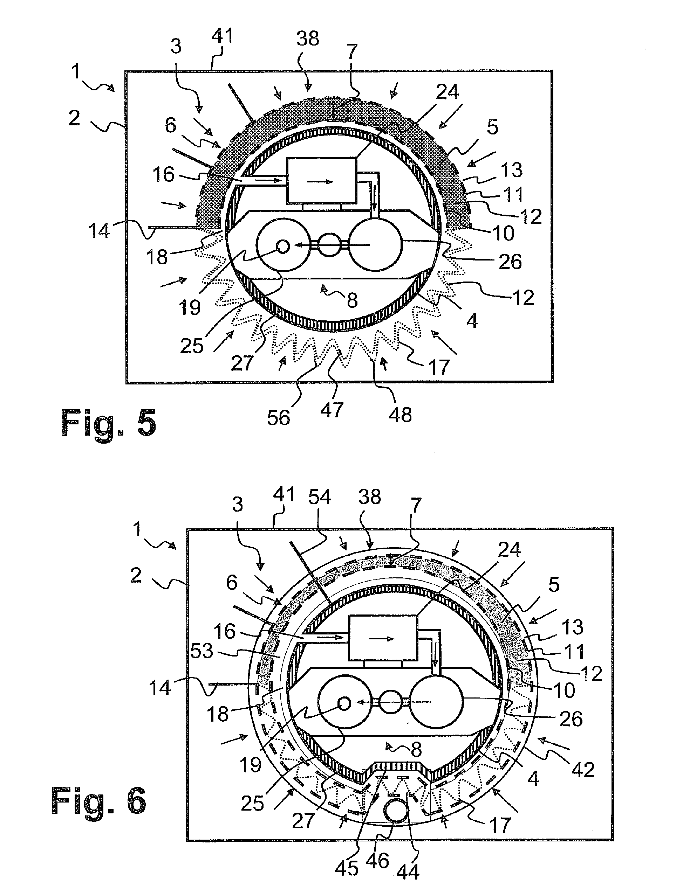

Die Fig. 1, 2, 3, 4, 5 und 6 weisen in weiten Teilen identisch bezeichnete Komponenten auf, so dass diese hier zunächst gemeinsam erläutert werden sollen. In den Fig. 1 bis 4 ist jeweils eine erfindungsgemäße Vorrichtung 1 in einer senkrechten Schnittdarstellung dargestellt. Die Fig. 5 und 6 zeigen eine Vorrichtung 1 in einer waagerechten Schnittansicht. Die Vorrichtung 1 weist jeweils einen Tank 2 mit einer Tankwand 41 auf, welcher einen Innenraum 3 begrenzt. Auf der Unterseite des Tanks 2 bildet die Tankwand 41 einen Tankboden 15. In dem Tankboden 15 befindet sich eine Tanköffnung 42. In die Tanköffnung 42 ist ein Behälter 4 eingesetzt, in welchem sich eine Fördereinheit 8 zur Förderung von Reduktionsmittel aus dem Tank 2 zu einer Abnahmestelle 9 befindet. Die Abnahmestelle 9 ist vorzugsweise ein Anschluss, an welchem eine Leitung oder ein Schlauch angeschlossen werden kann, durch den Reduktionsmittel von der Abnahmestelle 9 hin zu einer Zufuhrstelle für Reduktionsmittel in einer Abgasbehandlungskomponente gefördert werden kann. Der Behälter 4 hat eine Umfangsfläche 38, eine Behälteroberseite 39 sowie einen Behälterboden 40 und ist so in der Tanköffnung 42 angeordnet, dass diese durch den Behälter 4 verschlossen wird. Die Fördereinheit 8 ist dazu eingerichtet, Reduktionsmittel an einer Entnahmeöffnung 16 aus dem Tank 2 zu entnehmen und mit Hilfe einer Pumpe 24 über einen Drucksensor 26 zu der Abnahmestelle 9 zu fördern. Alternativ ist auch eine Kreisförderung von Reduktionsmittel von der Entnahmeöffnung 16 zu einer Rücklaufleitung 19 zurück in den Tank 2 möglich. Eine solche Kreisförderung wird über das Rücklaufventil 25 gesteuert, welches die Rücklaufleitung 19 freigeben oder verschließen kann.

In unmittelbarer Umgebung des Behälters 4 ist im Tankboden 15 ein Sumpf 28 ausgebildet, in welchem sich bei niedrigen Reduktionsmittelfüllständen im Tank 2 Reduktionsmittel ansammelt. An der Umfangsfläche 38 des Behälters 4 ist ein Filter 5 ausgebildet. Der Filter 5 ist so im Tank 2 angeordnet, dass er sich zumindest teilweise innerhalb des Sumpfes 28 befindet. Der Filter 5 umgibt die Umfangsfläche 38 des Behälters 4 im Falle der Ausführungsvarianten gemäß den Fig. 1 bis 4 vollständig. Der Filter 5 hat zwischen einer inneren Stützstruktur 10 und einer äußeren Stützstruktur 11 ein Filtermedium 12 (Fig. 1, 2, 3, 4). Die innere Stützstruktur 10 und die äußere Stützstruktur 11 haben jeweils Öffnungen 13, durch welche Reduktionsmittel in das Filtermedium 12 hinein und aus dem Filtermedium 12 hinaus gelangen kann. Der Filter 5 hat eine Filtertiefe 7 sowie eine Filterfläche 6. Zwischen dem Behälter 4 und dem Filter 5 ist ein Zwischenraum 18 vorgesehen, durch welchen Reduktionsmittel von einer beliebigen Stelle auf der Filterfläche 6 zu der Entnahmeöffnung 16 gelangen kann.

Als Besonderheit ist in Fig. 1 ein Flansch 37 dargestellt, welcher sich an der Tanköffnung 42 befindet. Ein solcher Flansch 37 kann beispielsweise aus Metall ausgeführt sein, während die restliche Tankwand 41 aus Kunststoff ausgeführt ist. Der Flansch 37 ist dann vorzugsweise zumindest teilweise in die Tankwand 41 eingegossen. Eine Heizung 27 ist im Bereich der Behälteroberseite 39 angeordnet.

In einer besonderen Ausgestaltung gemäß der Fig. 2 ist der Behälter 4 in Form eines ersten Topfs 29 ausgeführt. An diesem ersten Topf 29 befestigt ist der Filter 5. Der erste Topf 29 ist mit dem Filter 5 gemeinsam in die Tanköffnung 42 einsetzbar und mit Hilfe einer ersten Verbindung 32 mit dem Tank 2 verbunden. Die erste Verbindung 32 muss besonders fluiddicht ausgeführt sein, weil diese von dem Innenraum 3 des Tanks 2 her dauerhaft mit Reduktionsmittel in Kontakt steht. Nach unten verschlossen ist der erste Topf 29 durch eine Montageplatte 31, an welcher sich die Fördereinheit 8 befindet. Die Fördereinheit 8 ist vorzugsweise an der Montageplatte 31 vollständig montierbar, bevor diese in den ersten Topf 29 eingesetzt wird. Zur Einsetzbarkeit der Fördereinheit 8 mit der Montageplatte 31 in den ersten Topf 29 sind an der Entnahmestelle 16 eine erste Kupplung 34 und an der Rücklaufleitung 19 eine zweite Kupplung 35 vorgesehen, durch welche die Fördereinheit 8 fluiddicht an den Tank 2 bzw. den ersten Topf 29 angeschlossen werden kann. Die erste Kupplung 34 und die zweite Kupplung 35 sind beispielsweise mit Hilfe von unter Druck stehenden O-Ring-Dichtungen ausgeführt. Die Montageplatte 31 ist mit einer zweiten Verbindung 33 gegen den ersten Topf 29 bzw. den Behälter 4 oder den Tank 2 abgedichtet. Die zweite Verbindung 33 muss für wesentlich geringere Dichtigkeit ausgelegt sein als die erste Verbindung 32. Die zweite Verbindung 33 ist vorzugsweise nur dazu vorgesehen, Feuchtigkeit davon abzuhalten, von außen in den Behälter 4 einzudringen und steht nicht so wie die erste Verbindung 32 unter dem ständigen Einfluss von flüssigem Reduktionsmittel.

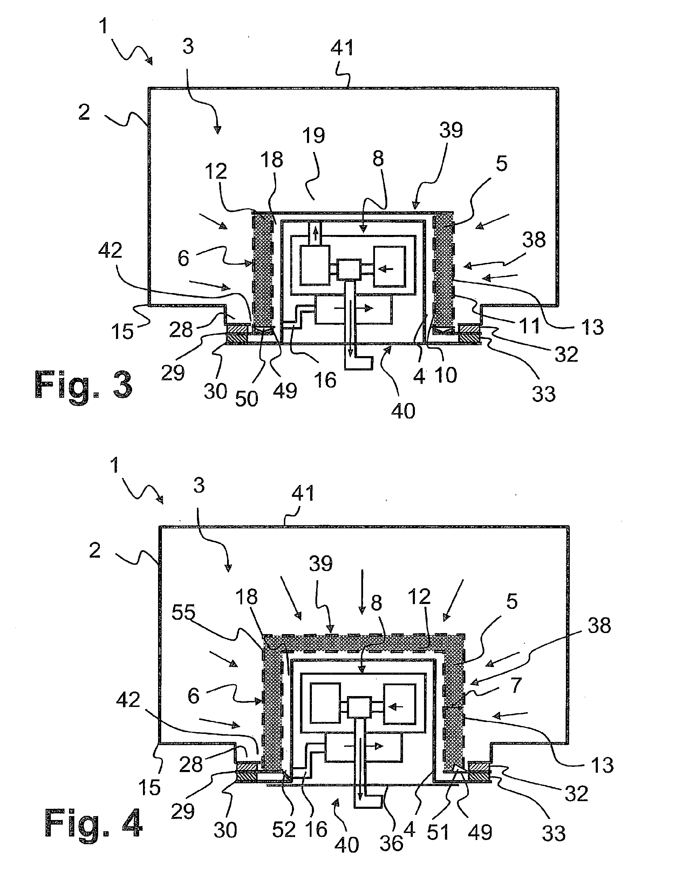

Als Besonderheit ist in Fig. 3 ein Behälter 4 dargestellt, welcher aus einem ersten Topf 29 und einem zweiten Topf 30 gebildet ist. Der erste Topf 29 hält hierbei den Filter 5. Der zweite Topf 30 beinhaltet die Fördereinheit 8 mit allen zugehörigen Komponenten. Die Rücklaufleitung 19 zur Kreisförderung von Reduktionsmittel durch die Fördereinheit 8 endet hierbei im Zwischenraum 18. Der Zwischenraum 18 ist zwischen dem ersten Topf 29 und dem zweiten Topf 30 ausgebildet. Auch hier ist der erste Topf mit einer ersten Verbindung 32 und der zweite Topf 30 mit einer zweiten Verbindung 33 an dem Tank 2 entsprechend Fig. 2 montiert. Hier ist allerdings sowohl bei der ersten Verbindung 32 als auch bei der zweiten Verbindung 33 eine hohe Dichtigkeit erforderlich, weil sowohl die erste Verbindung 32, als auch die zweite Verbindung 33 unter dem Einfluss von im Innenraum 3 des Tanks 2 befindlichem flüssigen Reduktionsmittel liegen. Das Filtermedium 12 bzw. Filtermaterial des Filters 5 ist an seinem Rand 49 bzw. in seinen Randbereichen mit einer Dichtlippe 50 an dem Behälter 4 abgedichtet, so dass Reduktionsmittel, welches aus dem Tank 2 zu einer Entnahmeöffnung 16 an dem Behälter 4 gelangt, den Filter 5 passieren muss.

In Fig. 4 ist eine Ausgestaltung der erfindungsgemäßen Vorrichtung 1 gezeigt, welche im Wesentlichen der Vorrichtung 1 gemäß Fig. 3 entspricht. Zusätzlich ist hier ein Deckel 36 vorgesehen, durch welchen der zweite Topf 30, welcher die Fördereinheit 8 beinhaltet, verschlossen ist. Die Fördereinheit 8 gemäß der Fig. 4 weist keine Rücklaufleitung 19 und kein Rücklaufventil 25 auf. Darüber hinaus ist der Behälter 4 gemäß der Fig. 4 vollständig von dem Filter 5 umgeben, so dass auch die Behälteroberseite 39 des Behälters 4 von dem Filter 5 umspannt ist. Das Filtermaterial bzw. das Filtermedium 12 ist an seinem Rand 49 bzw. in seinen Randbereichen mit einer Klebeverbindung 51 abgedichtet. Dabei ist das Filtermedium 12 an einer Trägerstruktur 55 abgedichtet, die durch eine Haube gebildet wird, welche auf den Behälter 4 aufsetzbar ist. Die Haube ersetzt in diesem Fall die äußere Stützstruktur. Die Haube ist an dem Behälter 4 ebenfalls durch die Klebeverbindung 51 abgedichtet, so dass Reduktionsmittel, welches aus dem Tank 2 zu einer Entnahmeöffnung 16 an dem Behälter 4 gelangt, den Filter 5 passieren muss. An dem Behälter 4 ist auch eine Struktur vorgesehen, welche dazu geeignet ist, Reduktionsmittel in den Zwischenraum 18 zwischen dem Filter 5 und dem Behälter 4 hin zu der Entnahmeöffnung 16 zu lenken. Eine derartige Struktur ist hier in Form von wenigstens einer (zumindest teilweise umlaufenden) Rille 52 auf der Oberfläche des Behälters 4 realisiert. Diese Rille 52 läuft dabei auf die Entnahmeöffnung 16 zu.

Fig. 5 zeigt einen waagerechten Schnitt durch eine erfindungsgemäße Vorrichtung 1. Über die Fig. 1 bis 4 hinaus sind hier Strukturen 14 zu erkennen, durch welche eine gleichmäßige Anströmung des Filters 5 mit Reduktionsmittel gewährleistet ist. Im oberen Teil der Fig. 5 ist ein Filter 5 entsprechend den Fig. 1 bis 4 dargestellt, welcher eine innere Stützstruktur 10 und eine äußere Stützstruktur 11 sowie ein dazwischen angeordnetes Filtermedium 12 aufweist. Im unteren Bereich ist ein Filter 5 mit einer Wellung 17 dargestellt, welcher eine besonders große Filterfläche 6 aufweist. Zusätzlich ist eine Heizung 27 vorgesehen, die sich vollumfänglich an der Umfangsfläche 38 des Behälters 4 befindet. Das Filtermedium 12 bzw. Filtermaterial ist hier mehrlagig ausgeführt. Für die verschiedenen beschriebenen Filterschichten zur Filterung unterschiedlich großer Partikel kann dann jeweils eine separate Schicht Filtermaterial verwendet werden, durch welches jeweils Partikel entsprechend den oben angegebenen Partikeldurchmessern passieren können. Das Filtermaterial ist hier als ein (einstückiges) Bandmaterial 56 ausgeführt, welches um den Behälter 4 herumgelegt bzw. gewickelt ist. Das Bandmaterial 56 ist dabei mehrfach um den Behälter 4 herumgelegt bzw. gewickelt. So wird ein mehrlagiges Filtermaterial ausgebildet. Das Bandmaterial 56 kann bereichsweise unterschiedliche Eigenschaften und insbesondere unterschiedliche Porengrößen aufweisen. Dabei sind jeweils Flächen des Filtermaterials mit unterschiedlichen Porengrößen ausgeführt. Ein solches Bandmaterial 56 ist hier derart um den Behälter 4 herumgelegt bzw. gewickelt, dass ein mehrlagiges Filtermaterial entsteht, welches entlang der Filtertiefe 7 unterschiedliche Porengrößen aufweist. Somit wird eine innenliegende erste Filterschicht 47 mit geringen Porendurchmessern und eine außenliegende zweite Filterschicht 48 mit größeren Porendurchmessern gebildet.

Fig. 6 zeigt einen waagerechten Schnitt durch eine weitere Ausführungsvariante der Vorrichtung 1. Über die Fig. 1 bis 5 hinaus sind hier Wärmeleitbrücken 54 vorgesehen, die zumindest teilweise durch die Strukturen 14 gebildet werden, sich hier aber von dem Behälter 4 durch den Filter 5 hindurch in den Tank 2 hinein erstrecken. Diese Wärmeleitbrücken 54 bestehen vorzugsweise zumindest teilweise aus einem Metall mit einer guten Wärmeleitfähigkeit. Über die Wärmeleitbrücken 54 wird Wärme von dem Behälter 4 zu dem Reduktionsmittel im Tank 2 bzw. im Filter 5 übertragen. Dabei werden auch weitere Komponenten wie z. B. Filter 5, Stützstruktur 10, 11, Trägerstruktur 55 usw. mit erwärmt. Der Zwischenraum 18 zwischen dem Filter 5 und dem Behälter 4 weist im oberen Bereich der Fig. 6 im Bereich des Tankbodens 15 eine Verbreiterung in Form einer (zumindest teilweise) umlaufenden Rinne 53 auf. So kann ein vergrößertes Reservoir zwischen dem Behälter 4 und dem Filter 5 ausgebildet sein. Der Filter 5 ist hier nicht rotationssymmetrisch ausgeführt. Der Filter 5 weist eine zylindrische Grundform mit einer ersten Eindellung 44 auf. An dem Behälter 4 ist eine entsprechende zweite Eindellung 45 vorgesehen. Durch eine solche Gestaltung ist die Orientierung des Filters 5 zum Behälter 4 vorgegeben, weil der Filter 5 nur so zu dem Behälter 4 orientiert sein kann, dass die erste Eindellung 44 in die zweite Eindellung 45 eingreift. Der Behälter 4 kann in eine runde Öffnung im Tankboden (Tanköffnung 42) eingesetzt sein, wobei der Querschnitt der runden Öffnung im Wesentlichen dem Querschnitt der zylindrischen Grundform entspricht. Durch die erste Eindellung 44 und die zweite Eindellung 45 ergibt sich dann ein Freiraum in der Öffnung, in welchen z. B. ein Levelsensor 46 eingesetzt werden kann, welcher nicht in dem Zwischenraum 18 zwischen dem Filter 5 und dem Tank 2 angeordnet ist bzw. sich außerhalb des Filters 5 im Tank 2 befindet.

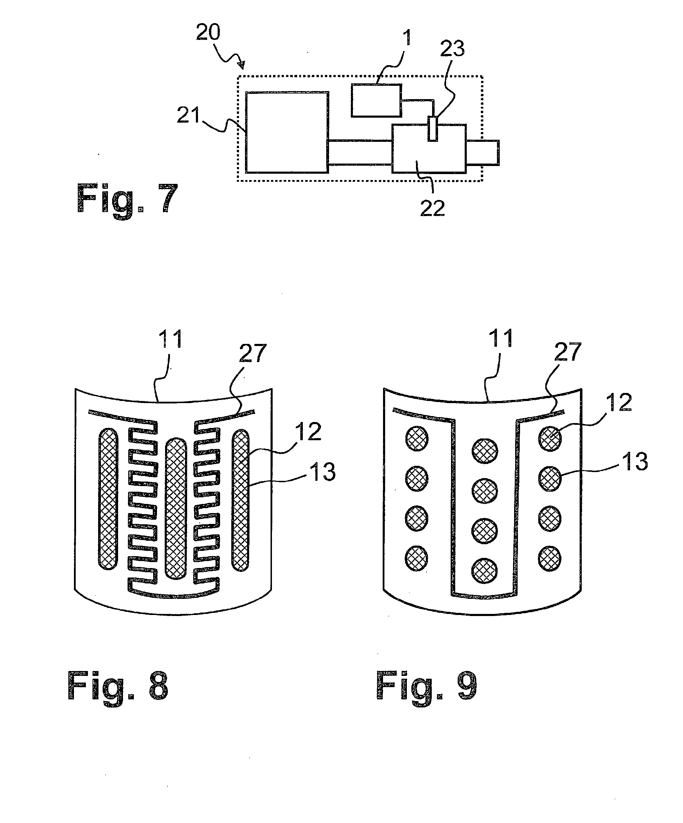

In Fig. 7 ist ein Kraftfahrzeug 20 dargestellt, aufweisend eine Verbrennungskraftmaschine 21 sowie eine Abgasanlage 22 zur Reinigung der Abgase der Verbrennungskraftmaschine 21. Die Abgasanlage 22 weist einen Injektor 23 auf, durch welchen Reduktionsmittel in die Abgasanlage 22 zugeführt werden kann. Der Injektor 23 wird von einer erfindungsgemäßen Vorrichtung 1 mit Reduktionsmittel versorgt. Der Injektor 23 und die erfindungsgemäße Vorrichtung 1 werden von einer Steuereinheit 43 gesteuert.

In Fig. 8 und in Fig. 9 sind jeweils Ausschnitte aus äußeren Stützstrukturen 11 für von verschiedenen Ausführungsvarianten von erfindungsgemäßen Vorrichtungen, insbesondere der Filter 5, dargestellt. Die äußeren Stützstrukturen 11 weisen jeweils Öffnungen 13 auf, durch welche Reduktionsmittel treten kann. Hinter den Öffnungen 13 ist in Fig. 8 und in Fig. 9 jeweils das Filtermedium 12 angedeutet. Zwischen den Öffnungen 13 befindet sich an der Stützstruktur 11 jeweils eine Heizung 27. Die Heizung 27 ist als um die Öffnungen 13 herum verlaufende Heizwendel ausgeführt. Diese Heizwendel kann beispielsweise aufgedruckt sein. In Fig. 8 sind schlitzartige, längliche Öffnungen 13 in der Stützstruktur 11 dargestellt. Die Fig. 9 offenbart eine größere Anzahl kleinerer, runder Öffnungen 13 in der Stützstruktur 11.

Bezugszeichenliste

| | |
|---|---|
| 1 | Vorrichtung |
| 2 | Tank |
| 3 | Innenraum |
| 4 | Behälter |
| 5 | Filter |
| 6 | Filterfläche |
| 7 | Filtertiefe |
| 8 | Fördereinheit |
| 9 | Abnahmestelle |
| 10 | innere Stützstruktur |
| 11 | äußere Stützstruktur |
| 12 | Filtermedium |
| 13 | Öffnung |
| 14 | Struktur |
| 15 | Tankboden |
| 16 | Entnahmeöffnung |
| 17 | Wellung |
| 18 | Zwischenraum |
| 19 | Rücklaufleitung |
| 20 | Kraftfahrzeug |
| 21 | Verbrennungskraftmaschine |
| 22 | Abgasanlage |
| 23 | Injektor |
| 24 | Pumpe |
| 25 | Rücklaufventil |
| 26 | Drucksensor |
| 27 | Heizung |
| 28 | Sumpf |
| 29 | erster Topf |

30 zweiter Topf
31 Montageplatte
32 erste Verbindung
33 zweite Verbindung
34 erste Kupplung
35 zweite Kupplung
36 Deckel
37 Flansch
38 Umfangsfläche
39 Behälteroberseite
40 Behälterboden
41 Tankwand
42 Tanköffnung
43 Steuereinheit
44 erste Eindellung
45 zweite Eindellung
46 Levelsensor
47 erste Filterschicht
48 zweite Filterschicht
49 Rand
50 Dichtlippe
51 Klebeverbindung
52 Rille
53 Rinne
54 Wärmeleitbrücke
55 Trägerstruktur
56 Bandmaterial

**Patentansprüche**

1. Vorrichtung (1) zur Bereitstellung von flüssigem Reduktionsmittel, aufweisend einen Tank (2) mit einem Innenraum (3) und einen zumindest teilweise im Innenraum (3) des Tanks (2) angeordneten Behälter (4), wobei der Behälter (4) außen zumindest teilweise von einem Filter (5) mit einer Filterfläche (6) und einer Filtertiefe (7) umgeben ist, und sich in dem Behälter (4) eine Fördereinheit (8) befindet, die dazu eingerichtet ist, Reduktionsmittel aus dem Tank (2) durch den Filter (5) hinaus zu einer Abnahmestelle (9) für Reduktionsmittel zu fördern, **dadurch gekennzeichnet daß** Reduktionsmittel, das im Tank (2) gelagert ist, zuerst den Filter (5) durchströmt bevor es in einem inneren Bereich des Behälters (4) einströmt, insbesondere bevor es durch eine Entnahmeöffnung (16) in die Fördereinheit (8) fließt.

2. Vorrichtung (1) nach Patentanspruch 1, wobei der Filter (5) eine innere Stützstruktur (10) und eine äußere Stützstruktur (11) sowie ein zwischen der inneren Stützstruktur (10) und der äußeren Stützstruktur (11) angeordnetes Filtermedium (12) aufweist, wobei die innere Stützstruktur (10) und die äußere Stützstruktur (11) Öffnungen (13) zum Durchfluss von Reduktionsmittel aufweisen.

3. Vorrichtung (1) nach einem der vorhergehenden Patentansprüche, wobei um den Filter (5) herum im Tank (2) Strukturen (14) zur Vergleichmäßigung der Einströmung von Reduktionsmittel zum Filter (5) hin vorgesehen sind.

4. Vorrichtung (1) nach einem der vorhergehenden Patentansprüche, wobei der Tank (2) einen Tankboden (15) aufweist und der Behälter (4) eine Entnahmeöffnung (16) aufweist, durch welche Reduktionsmittel aus dem Tank (2) in den Behälter (4) und die Fördereinheit (8) fließen kann, und der Behälter (4) so am Tankboden (15) angeordnet ist, dass sich die Entnahmeöffnung (16) in der Nähe des Tankbodens (15) befindet.

5. Vorrichtung (1) nach einem der vorhergehenden Patentansprüche, wobei die Filterfläche (6) des Filters (5) zumindest dem Zehnfachen des Quadrates der Filtertiefe (7) entspricht.

6. Vorrichtung (1) nach einem der vorhergehenden Patentansprüche, wobei der Filter (5) eine Wellung (17) aufweist.

7. Vorrichtung (1) nach einem der vorhergehenden Patentansprüche, wobei zwischen dem Filter (5) und dem Behälter (4) ein Zwischenraum (18) vorgesehen ist, durch welchen Reduktionsmittel von einer beliebigen Stelle auf der Filterfläche (6) zu einer Entnahmeöffnung (16) am Behälter (4) gelangen kann.

8. Vorrichtung (1) nach Patentanspruch 7, wobei die Fördereinheit (8) eine Rücklaufleitung (19) zum Rücklauf von Reduktionsmittel aus der Fördereinheit (8) in den Tank (2) aufweist, und diese Rücklaufleitung (19) in einen Zwischenraum (18) zwischen dem Filter (5) und dem Behälter (4) mündet.

9. Kraftfahrzeug (20), aufweisend eine Verbrennungskraftmaschine (21) und eine Abgasanlage (22) zur Reinigung der Abgase der Verbrennungskraftmaschine (21), wobei die Abgasanlage (22) einen Injektor (23) zur Zufuhr eines Reduktionsmittels in die Abgasanlage (22) aufweist und der Injektor (23) an eine Vorrichtung (1) zur Bereitstellung von flüssigem Reduktionsmittel nach einem der vorhergehenden Patentansprüche angeschlossen ist.

**Claims**

1. Device (1) for providing liquid reducing agent, having a tank (2) with an interior space (3) and having a vessel (4) arranged at least partially in the interior space (3) of the tank (2), wherein the vessel (4) is surrounded on the outside at least partially by a filter (5) with a filter surface (6) and a filter depth (7), and in the vessel (4) there is situated a delivery unit (8) which is set up to deliver reducing agent from the tank (2), through the filter (5) and to an extraction point (9) for reducing agent, **characterized in that** reducing agent which is stored in the tank (2) flows firstly through the filter (5) before flowing into an inner region of the vessel (4), in particular before flowing through an extraction opening (16) into the delivery unit (8).

2. Device (1) as claimed in claim 1, wherein the filter (5) has an inner support structure (10) and an outer support structure (11) and also a filter medium (12) arranged between the inner support structure (10) and the outer support structure (11), wherein the inner support structure (10) and the outer support structure (11) have openings (13) for a throughflow of reducing agent.

3. Device (1) as claimed in one of the preceding claims, wherein structures (14) for homogenizing the inflow of reducing agent into the filter (5) are provided around the filter (5) in the tank (2).

4. Device (1) as claimed in one of the preceding claims, wherein the tank (2) has a tank bottom (15) and the vessel (4) has an extraction opening (16) through which reducing agent can flow out of the tank (2) into the vessel (4) and the delivery unit (8), and the vessel (4) is arranged on the tank bottom (15) such that the extraction opening (16) is situated in the vicinity of the tank bottom (15).

5. Device (1) as claimed in one of the preceding claims, wherein the filter surface (6) of the filter (5) corresponds to at least ten times the square of the filter depth (7).

6. Device (1) as claimed in one of the preceding claims, wherein the filter (5) has a corrugation (17).

7. Device (1) as claimed in one of the preceding claims, wherein between the filter (5) and the vessel (4) there is provided an intermediate space (18) through which reducing agent can pass from any point on the filter surface (6) to an extraction opening (16) on the vessel (4).

8. Device (1) as claimed in claim 7, wherein the delivery unit (8) has a return line (19) for the return of reducing agent from the delivery unit (8) into the tank (2), and said return line (19) opens into an intermediate space (18) between the filter (5) and the vessel (4).

9. Motor vehicle (20) having an internal combustion engine (21) and an exhaust system (22) for purification of the exhaust gases of the internal combustion engine (21), wherein the exhaust system (22) has an injector (23) for supplying a reducing agent into the exhaust system (22), and the injector (23) is connected to a device (1) for providing liquid reducing agent as claimed in one of the preceding claims.

**Revendications**

1. Dispositif (1) de fourniture d'agent réducteur liquide, comprenant un réservoir (2) pourvu d'un espace intérieur (3) et un récipient (4) disposé au moins partiellement dans l'espace intérieur (3) du réservoir (2), le récipient (4) étant entouré à l'extérieur au moins partiellement par un filtre (5) présentant une surface de filtre (6) et une profondeur de filtre (7), et une unité de transport (8) se trouvant dans le récipient (4), laquelle est conçue pour transporter de l'agent réducteur hors du réservoir (2) à travers le filtre (5) jusqu'à un point de prélèvement (9) d'un agent réducteur, **caractérisé en ce que** de l'agent réducteur qui est stocké dans le réservoir (2) traverse d'abord le filtre (5) avant qu'il n'afflue dans une région intérieure du récipient (4), en particulier avant qu'il ne s'écoule à travers une ouverture de prélèvement (16) dans l'unité de transport (8).

2. Dispositif (1) selon la revendication 1, le filtre (5) comprenant une structure de support intérieure (10) et une structure de support extérieure (11) ainsi qu'un milieu filtrant (12) disposé entre la structure de support intérieure (10) et la structure de support extérieure (11), la structure de support intérieure (10) et la structure de support extérieure (11) comprenant des ouvertures (13) pour l'écoulement d'agent réducteur.

3. Dispositif (1) selon l'une quelconque des revendications précédentes, dans lequel des structures (14) pour l'homogénéisation de l'afflux d'agent réducteur vers le filtre (5) sont prévues autour du filtre (5) dans le réservoir (2).

4. Dispositif (1) selon l'une quelconque des revendications précédentes, dans lequel le réservoir (2) comprend un fond de réservoir (15) et le récipient (4) comprend une ouverture de prélèvement (16) à travers laquelle de l'agent réducteur peut s'écouler hors du réservoir (2) dans le récipient (4) et l'unité de transport (8), et le récipient (4) est disposé sur le fond de réservoir (15) de telle sorte que l'ouverture de prélèvement (16) se trouve à proximité du fond de réservoir (15).

5. Dispositif (1) selon l'une quelconque des revendications précédentes, dans lequel la surface de filtre (6) du filtre (5) correspond à au moins dix fois le carré de la profondeur de filtre (7).

6. Dispositif (1) selon l'une quelconque des revendications précédentes, dans lequel le filtre (5) présente une ondulation (17).

7. Dispositif (1) selon l'une quelconque des revendications précédentes, dans lequel un espace intermédiaire (18) est prévu entre le filtre (5) et le récipient (4), à travers lequel espace intermédiaire de l'agent réducteur peut parvenir, à partir d'un point quelconque sur la surface de filtre (6), jusqu'à une ouverture de prélèvement (16) sur le récipient (4).

8. Dispositif (1) selon la revendication 7, dans lequel l'unité de transport (8) comprend une conduite de retour (19) pour le retour d'agent réducteur à partir de l'unité de transport (8) dans le réservoir (2), et cette conduite de retour (19) débouche dans un espace intermédiaire (18) entre le filtre (5) et le récipient (4).

9. Véhicule automobile (20) comprenant un moteur à combustion interne (21) et un système d'échappement (22) pour l'épuration des gaz d'échappement du moteur à combustion interne (21), le système d'échappement (22) comprenant un injecteur (23) pour l'amenée d'un agent réducteur dans le système d'échappement (22) et l'injecteur (23) étant raccordé à un dispositif (1) de fourniture d'agent réducteur liquide selon l'une quelconque des revendications précédentes.

Fig. 1

Fig. 2

Fig. 3

Fig. 4

EP 2 556 225 B1

**Fig. 5**

**Fig. 6**

15

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008001948 A1
- DE 102004051746 A1
- DE 19936287 A1